# EUROPEAN PATENT SPECIFICATION

(11) **EP 2 183 176 B1**
(45) Date of publication and mention of the grant of the patent: **12.09.2012**
(21) Application number: 08778999.6
(22) Date of filing: 11.07.2008
(51) Int. Cl.: B65G 69/00

(54) **DOCK SHELTER**
LADERAMPENSCHUTZ
ABRI DE QUAI DE CHARGEMENT

(30) Priority: 17.07.2007 NL 1034144
(43) Date of publication of application: 12.05.2010
(73) Proprietor: Hörmann Alkmaar BV, 1822 BB Alkmaar (NL)
(72) Inventor: HIELKEMA, Harmen, Jochum, 1822 MH Alkmaar (NL)
(74) Representative: Koomen, M.J.I.
(86) International application number: PCT/NL2008/000175
(87) International publication number: WO 2009/011568

(56) References cited:
- DE-U1- 9 302 642
- US-A- 5 467 563

## Description

The present invention relates to a dock shelter, comprising two parallel and vertically arranged front frame parts, each of which by means of at least one arm is connected to a façade, whereby a left front frame part is intended to form a supporting element for a left side and a right front frame part is intended to form a supporting element for a right side of the shelter, while in between the frame parts at the upper side thereof there is provided a supporting element for the roof of the shelter.

Such a dock shelter is known.

The known dock shelter is intended to form a more or less watertight seal between the back side of the cargo space of a truck and the front opening in the façade of the building into which the cargo from the truck has to be transferred, to which end the sides and the roof of the shelter are covered with a cloth. With a known shelter the front frame parts are connected to the façade by means of hinging arms to guard against or minimize damage in the case the truck is not correctly placed in the front opening. When a truck drives for instance against a side the arms with the front frame parts connected thereto can be pushed away, whereby, by means of the hinging arm, a movement slanting upwards in the direction of the façade, takes place.

The known shelter has the drawback, that when a truck is standing still in front of the front opening and is unloaded damage can still occur to the shelter and/or the truck. When the cargo is unloaded from the truck the truck will, due to the fact that it is loaded less heavy, spring upwards. The roof of the truck thereupon pushes against the roof of the shelter, which movement the shelter cannot follow.

The invention aims to obviate this drawback of the known shelter.

From US 5 467 563 A is known a dock shelter with arms that at one end are pivotably connected by a gliding member in a vertical guide connected to the façade of the building. At the other end the arms are rigidly connected to a transverse beam that supports the cover of the shelter. With this shelter the side portions are suspended by cables that are guided through the transverse beam and are connected to one another by a tension spring and in the lower part are supported by coil springs.

This known dock shelter has the drawback, that the side portions have to be suspended or supported by springs.

The dock shelter according to the present invention comprises two parallel and vertically arranged front frame parts, each of which by means of at least one arm is connected to a façade, whereby a left front frame part is intended to form a supporting element for a left side and a right front frame part is intended to form a supporting element for a right side of the shelter, while in between the frame parts at the upper side thereof there is provided a supporting element for the roof of the shelter, whereby the arm at one or both ends is provided with connecting means which are adapted to cooperate with counter-connecting means being part of the façade and/or the front frame part for the forming of a connection of the arm to the façade and/or the front frame part that is movable or slidable in a vertical direction along a given distance, such that the front frame parts are movable in a vertical direction parallel to the façade, and is characterized in that the front frame parts are connected to the façade by means of at least one pair of arms, which arms cross each other.

According to a characteristic of the dock shelter according to the invention the means are formed by a part provided on the façade and/or the front frame part, which part is provided with a vertical slot in which a pin that is provided at one or both ends of the arm is locked and is movable in a vertical direction.

According to another characteristic of the dock shelter according to the invention the means are formed by a part provided at one or both ends of the arm, which part is provided with a vertical slot in which a pin that is provided at the façade and/or the front frame part is locked and is movable in a vertical direction.

Because the front frame parts of the dock shelter according to the invention can move straight up, that is to say in an upwards direction that is parallel to the façade, the shelter can move in the same direction with an upwards springing truck. In this manner damage to the shelter or the truck can be prevented or limited.

The invention will now be described further with reference to the drawings of an example of an embodiment.
Figure 1 shows a perspective view of a truck that is standing still in front of the front opening in a façade with in between there the dock shelter.
Figure 2 shows a side view of the truck, façade and dock shelter according to figure 1, in which the cloth that covers the side of the shelter is left out and in which a front frame part is visible.
Figure 3 shows a side view of a rear frame part, a front frame part with in between two arms.

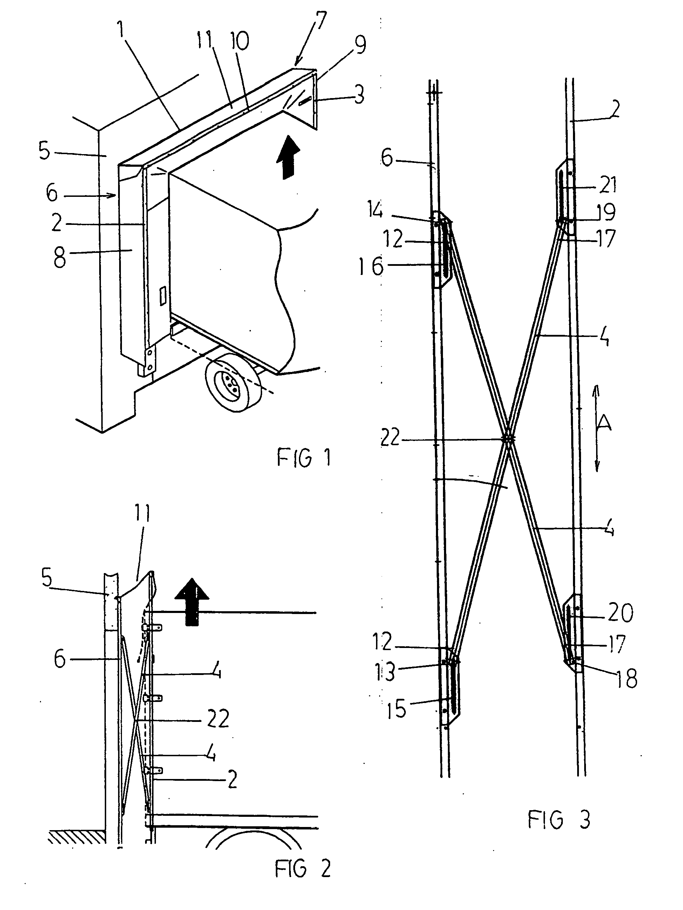

As is shown in the figures 1, 2 and 3 the dock shelter 1 comprises two parallel and vertically arranged front frame parts 2, 3, which each , in this example of an embodiment, by means of two arms 4 (see figures 2 and 3) are connected to two, likewise parallel and vertically arranged, rear frame parts 6, 7 mounted to the façade 5 (in figure 1 only the position of the rear frame parts 6, 7 covered by the cloth of the shelter, is indicated by an arrow 6, 7).

The left front frame part 2 is intended to form a supporting element for the left side 8 and the right front frame part 3 is intended to form a supporting element for the right side 9 of the shelter 1. In between the frame parts 2, 3 at the upper side thereof there is provided a supporting element 10 for the roof 11 of the shelter. As can be seen in the figures 2 and 3 two arms 4 that cross each other are provided each at one outer end 12 with a pin 13, 14 that is locked and is movable in two slots 15, 16 provided in the left rear frame part 6 mounted to the façade. The arms 4 are provided each at their other outer end 17 with a pin 18, 19 that is locked and movable in two slots 21, 21 provided in the front frame part 2. The slots 20, 21 in the front frame part 2 allow for the front frame part 2 to move upwards and downwards in a vertical direction relative to the pin 18, 19 (in figure 3 shown by the arrow A). By means of the slots 15, 16 likewise provided in the left rear frame part 6 the arms 4 together with the front frame part 2 can also move upwards in vertical direction.

The dock shelter according to the invention allows for a standing truck to push the shelter in a direction parallel to the façade upwards along a given distance, without immediately causing damage.

In the embodiment shown in the drawings the front frame parts 2, 3 are each connected to the rear frame parts 6, 7 by means of two hinging arms 4. Further the arms 4 are connected to each other at the place 22 (figure 2 and 3) where they cross each other. When a truck pushes against the front frame parts 2, 3 the arms 4 can fold together along a given distance and the front frame parts 2, 3 and with these the sides of the shelter can slide away horizontally, in the direction of the façade.

## Claims

1. Dock shelter, comprising two parallel and vertically arranged front frame parts [2, 3], each of which by means of at least one arm [4] is connected to a façade [5], whereby a left front frame part [2] is intended to form a supporting element for a left side [8] and a right front frame part [3] is intended to form a supporting element for a right side [9] of the shelter [1], while in between the frame parts [2, 3] at the upper side thereof there is provided a supporting element [10] for the roof [11] of the shelter, whereby the arm [4] at one or both ends [12, 17] is provided with connecting means [13, 14, 18, 19] which are adapted to cooperate with counter-connecting means [15, 16, 20, 21] being part of the façade [5] and/or the front frame part [2, 3] for the forming of a connection of the arm [4] to the façade [5] and/or the front frame part [2, 3] that is movable or slidable in a vertical direction along a given distance, such that the front frame parts [2, 3] are movable in a vertical direction parallel to the façade [5], **characterized in that** the front frame parts [2, 3] are connected to the façade by means of at least one pair of arms [4], which arms [4] cross each other.

2. Dock shelter according to claim 1, **characterized in that** the means are formed by a part provided on the façade [5] and/or the front frame part [2, 3], which part is provided with a vertical slot [15, 16, 20, 21] in which a pin [13, 14, 18, 19] that is provided at one or both ends [12, 17] of the arm [4] is locked and is movable in a vertical direction.

3. Dock shelter according to claim 1, **characterized in that** the means are formed by a part provided at one or both ends of the arm, which part is provided with a vertical slot in which a pin that is provided at the façade [5] and/or the front frame part [2, 3] is locked and is movable in a vertical direction.

4. Dock shelter according to one of the preceding claims, **characterized in that** the place where the arms [4] cross each other is formed by a hinge point [22].

## Patentansprüche

1. Laderampenschutz mit zwei parallel und vertikal angeordneten vorderen Rahmenteilen (2, 3), die jeweils mittels wenigstens eines Arms (4) mit einer Gebäudefront (5) verbunden sind, wobei ein linker vorderer Rahmenteil (2) vorgesehen ist, um ein Stützelement für eine linke Seite (8) zu bilden, und ein rechter vorderer Rahmenteil (3) vorgesehen ist, um ein Stützelement für eine rechte Seite (9) des Schutzes (1) zu bilden, während zwischen den Rahmenteilen (2, 3) an deren Oberseite ein Stützelement (10) für das Dach (11) des Schutzes vorgesehen ist, wobei der Arm (4) an einem oder beiden Enden (12, 17) mit Verbindungsmitteln (13, 14, 18, 19) versehen ist, die ausgelegt sind, um mit Gegen-Verbindungsmitteln (15, 16, 20, 21), die Teil der Gebäudefront (5) und/oder des vorderen Rahmenteils (2, 3) sind, zusammenzuwirken, um eine Verbindung des Arms (4) mit der Gebäudefront (5) und/oder dem vorderen Rahmenteil (2, 3) herzustellen, das in vertikaler Richtung über eine vorgegebene Distanz bewegbar oder verschiebbar ist, so dass die vorderen Rahmenteile (2, 3) in vertikaler Richtung parallel zu der Gebäudefront (5) bewegbar sind, **dadurch gekennzeichnet, dass** die vorderen Rahmenteile (2, 3) mittels wenigstens eines Paars von Armen (4) mit der Gebäudefront verbunden sind, wobei die Arme (4) einander kreuzen.

2. Laderampenschutz nach Anspruch 1, **dadurch gekennzeichnet, dass** die Mittel durch einen an der Gebäudefront (5) und/oder dem vorderen Rahmenteil (2, 3) vorgesehenen Teil gebildet sind, wobei der Teil mit einem vertikalen Schlitz (15, 16, 20, 21) versehen ist, in den ein Stift (13, 14, 18, 19), der an einem oder beiden Enden (12, 17) des Arms (4) vorgesehen ist, einrastet und in vertikaler Richtung bewegbar ist.

3. Laderampenschutz nach Anspruch 1, **dadurch gekennzeichnet, dass** die Mittel durch einen Teil gebildet sind, der an einem oder beiden Enden des Arms vorgesehen ist, wobei der Teil mit einem vertikalen Schlitz versehen ist, in den ein Stift, der an der Gebäudefront (5) und/oder dem vorderen Rahmenteil (2, 3) vorgesehen ist, einrastet und in vertikaler Richtung bewegbar ist.

4. Laderampenschutz nach einem der vorhergehenden Ansprüche, **dadurch gekennzeichnet, dass** die Stelle, an der die Arme (4) einander kreuzen, durch einen Gelenkpunkt (22) gebildet wird.

## Revendications

1. Abri de quai de chargement comprenant deux parties de bâti avant (2, 3) agencées parallèlement et verticalement, chacune d'elles étant raccordée à une façade (5) à l'aide d'au moins un bras (4), une partie de bâti avant-gauche (2) étant prévue pour former un élément de support destiné au côté gauche (8) et une partie de bâti avant-droite (3) étant prévue pour former un élément de support destiné au côté droit (9) de l'abri (1) tandis qu'entre les parties de bâti (2, 3), au niveau de leur partie supérieure, se trouve un élément de support (10) destiné au toit (11) de l'abri, le bras (4) étant muni, à une ou deux extrémités (12, 17), de moyens de raccordement (13, 14, 18, 19) adaptés pour coopérer avec des moyens de contre-raccordement (15, 16, 20, 21) intégrés à la façade (5) et/ou à la partie de bâti avant (2, 3) dans le but de permettre le raccordement du bras (4) à la façade (5) et/ou à la partie de bâti avant (2, 3) qui peut se déplacer ou coulisser à la verticale sur une distance donnée, de telle sorte que les parties de bâti avant (2, 3) puissent se déplacer à la verticale parallèlement à la façade (5), **caractérisé en ce que** les parties de bâti avant (2, 3) sont raccordées à la façade à l'aide d'au moins une paire de bras (4), lesquels bras (4) se croisent.

2. Abri de quai de chargement selon la revendication 1, **caractérisé en ce que** les moyens sont formés par une pièce prévue sur la façade (5) et/ou la partie de bâti avant (2, 3), laquelle pièce est munie d'une fente verticale (15, 16, 20, 21) dans laquelle une cheville (13, 14, 18, 19) prévue à une ou deux extrémités (12, 17) du bras (4) est verrouillée et peut être déplacée à la verticale.

3. Abri de quai de chargement selon la revendication 1, **caractérisé en ce que** les moyens sont formés par une pièce prévue à une ou deux extrémités du bras, laquelle pièce est munie d'une fente verticale dans laquelle une cheville prévue au niveau de la façade (5) et/ou de la partie de bâti avant (2, 3) est verrouillée et peut être déplacée à la verticale.

4. Abri de quai de chargement selon l'une quelconque des revendications précédentes, **caractérisé en ce que** le point d'intersection des bras (4) est formé par un point charnière (22).
